# EUROPÄISCHE PATENTANMELDUNG

(11) **EP 4 187 680 A1**
(43) Veröffentlichungstag der Anmeldung: **31.05.2023**
(21) Anmeldenummer: 22207879.2
(22) Anmeldetag: 16.11.2022
(51) Int. Cl.: H01M 10/613, H01M 10/617, H01M 10/643, H01M 50/204, H01M 10/656

(54) **KÜHLSYSTEM FÜR EINE BATTERIEEINHEIT SOWIE BATTERIEEINHEIT MIT EINEM SOLCHEN KÜHLSYSTEM**

(30) Priorität: 24.11.2021 DE 102021005846
(71) Anmelder: e.battery systems GmbH, 6922 Wolfurt (AT)
(72) Erfinder:
(74) Vertreter: Einsiedler, Johannes

(57) **Zusammenfassung**

Die vorliegende Erfindung betrifft ein Kühlsystem für eine Batterieeinheit (1) aus einer Vielzahl von miteinander elektrisch verbundenen Einzelzellen (11), wenigstens umfassend: eine Einhausung (2) mit Seitenwänden (21) und einer ersten, vorderseitigen (22) und zweiten, rückseitigen (23) Abdeckung zum druck- und flüssigkeitsdichten Abschließen eines Innenraumes (24) der Einhausung (2) nach außen; wobei die Einzelzellen (11) im Innenraum (24) angeordnet sind. Es zeichnet sich durch einen ersten, inneren Kühlmittelkreislauf (3) aus, bei dem wenigstens eine Pumpe (5) ein erstes Kühlmittel (32) im Innenraum (24) zirkuliert; und durch wenigstens einen zweiten, äußeren Kühlmittelkreislauf (4), welcher durch wenigstens eine Kühlmittelleitung (41) in wenigstens einer der Seitenwände (21) gebildet wird und in welchem ein zweites Kühlmittel (42) zirkuliert. Das erfindungsgemäße Kühlsystem erlaubt vorteilhaft den Bau von thermisch unabhängig Batterieeinheiten (1) mit einer homogenen Wärmeübertragung im Innenraum (24). Solche Batterieeinheiten (1) lassen sich einfach zu größeren Batteriesystemen zusammenfügen, wobei jede Batterieeinheit (1) individuell geregelt werden kann.

## Beschreibung

Die vorliegende Erfindung betrifft ein Kühlsystem für eine Batterieeinheit aus einer Vielzahl von miteinander elektrisch verbundenen Einzelzellen, wenigstens umfassend: eine Einhausung mit Seitenwänden und einer ersten, vorderseitigen und zweiten, rückseitigen Abdeckung zum druck- und flüssigkeitsdichten Abschließen eines Innenraumes der Einhausung nach außen; wobei die Einzelzellen im Innenraum angeordnet sind.

Darüber hinaus betrifft die vorliegende Erfindung auch eine Batterieeinheit mit einem derartigen Kühlsystem.

Zur Gewährleistung optimaler Betriebsbedingungen und einer langen Lebensdauer von wiederaufladbaren Batterieeinheiten, insbesondere auf Basis von Lithium-Ionen-Zellen, müssen Batterieeinheiten, die zumeist aus einer Vielzahl von Einzelzellen bestehen, während des Betriebs, also während des Ladens und Entladens, auf einer Soll-Temperatur gehalten bzw. effizient und schnell auf besagte Soll-Temperatur gebracht werden. Dabei sollten Temperaturänderungen möglichst homogen über die gesamte Batterieeinheit hinweg erfolgen, um eine thermische Überlastung einzelner Zellen, beispielsweise am Rand der Batterieeinheit, zu vermeiden.

Gängige Kühlsysteme für wiederaufladbare Batterieeinheiten des Stands der Technik führen überschüssige Wärme gewöhnlich über mit einem externen Kühlkreislauf verbundenen Kühlelemente ab, die wiederum mit den Einzelzellen der Batterieeinheit in thermischem Kontakt stehen. Ein System dieser Art ist beispielsweise aus der DE 10 2016 119 122 A1 bekannt. Derartige Kühlsysteme sind nachteilig relativ träge. Um einen schnelleren Wärmeaustausch gewährleisten zu können, wurden verschiedentlich sog. "immersion cooling" -Systeme, also Flüssigkeitstauchkühlungssysteme, entwickelt, wie sie auch bspw. zur Kühlung von Computerhardware seit einiger Zeit Verwendung finden. Aus der CN 1 08 011 158 A, der EP 3 654 442 A1 und der WO 2020/ 049 249 A1 sind zum Beispiel Flüssigkeitstauchkühlungssysteme bekannt, bei denen die zu kühlenden Bauteile vollständig in eine dielektrische Flüssigkeit, also eine wärmeleitende, aber elektrisch nicht- oder kaum leitende Flüssigkeit, versenkt und dadurch gekühlt bzw. thermisch stabilisiert werden. Nachteile dieser Art der Kühlsysteme sind ein notwendiger hoher Aufwand bezüglich einer Abdichtung der Vorrichtungen zum Schutz vor Kühlmittelverlust sowie die hohen benötigten Kühlmittelmengen, was zu vergleichsweise schweren Batterieeinheiten und besonders hohen Kosten für jede einzelne Batterieeinheit führt.

Hiervon ausgehend liegt der vorliegenden Erfindung die Aufgabe zugrunde, ein gegenüber dem Stand der Technik verbessertes Kühlsystem bereitzustellen, welches eine möglichst homogene Wärmeübertragung von den Einzelzellen einer Batterieeinheit nach außen bzw. eine möglichst gleichmäßige Temperierung der Einzelzellen innerhalb einer Batterieeinheit ermöglicht und gleichzeitig möglichst kostengünstig und leicht ausgestaltet ist. Zudem sollen einzelne Batterieeinheiten möglichst einfach zu größeren Batteriesystem kombiniert werden können.

Diese Aufgabe wird durch ein Kühlsystem für eine Batterieeinheit mit den Merkmalen des unabhängigen Patentanspruchs 1 bzw. durch eine Batterieeinheit nach Patentanspruch 13 gelöst.

Das erfindungsgemäße Kühlsystem zeichnet sich gegenüber gattungsbildenden Kühlsystemen für Batterieeinheiten dadurch aus, dass das Kühlsystem einen ersten, inneren Kühlmittelkreislauf umfasst, bei dem wenigstens eine Pumpe ein erstes Kühlmittel im Innenraum der Einhausung zirkuliert; und wenigstens einen zweiten, äußeren Kühlmittelkreislauf umfasst, welcher durch wenigstens eine Kühlmittelleitung in wenigstens einer der Seitenwände der Einhausung gebildet wird und in welchem ein zweites Kühlmittel zirkuliert. Es zeichnet sich zudem dadurch aus, dass im Innenraum der Einhausung Haltemittel für die Halterung der Einzelzellen angeordnet sind, wobei genauso viele Haltemittel wie Einzelzellen im Innenraum vorgesehen sind; und wobei die Einzelzellen jeweils eine Hülle und zwei Pole aufweisen. Die Haltemittel halten die Einzelzellen derart, dass die Hülle der Einzelzellen gegenüber einem direkten Kontakt mit dem ersten Kühlmittel abgeschirmt ist und dass die Pole der Einzelzellen frei bleiben und mit dem ersten Kühlmittel in direkten Kontakt kommen.

Der erste, innere Kühlmittelkreislauf dient einer direkten Wärmeübertragung (Wärmeaufnahme und Wärmeabgabe) von den bzw. auf die Einzelzellen im Innenraum der Einhausung. Da das erste Kühlmittel die Einzelzellen, insbesondere deren Pole, direkt umspült, ist die Wärmeübertragung zwischen den Einzelzellen und dem ersten Kühlmittel besonders effizient und die Wärme kann vorteilhaft schnell von den Einzelzellen weg und hin zu den Seitenwänden und/oder zu den Abdeckungen der Einhausung transportiert werden. Der zweite, äußere Kühlmittelkreislauf, welcher durch wenigstens eine Kühlmittelleitung in wenigstens einer der Seitenwände der Einhausung, bevorzugt durch eine Vielzahl von Kühlmittelleitungen in allen Seitenwänden der Einhausung, gebildet wird, nimmt die über den ersten, inneren Kühlmittelkreislauf transportierte Wärme auf und leitet sie nach außen ab bzw. gibt Wärme von außen zum Zwecke der Temperierung an den ersten, inneren Kühlmittelkreislauf und damit den Innenraum der Einhausung weiter. Das Kühlsystem kann somit als Wärmetauscher fungieren und ermöglicht vorteilhaft den Bau von thermisch von der Umgebung unabhängigen Batterieeinheiten.

Über die Haltemittel für die Halterung der Einzelzellen kann vorteilhaft ein definierter Abstand zwischen den Einzelzellen vorgegeben werden. Abstandsvorgaben von Zellherstellern lassen sich somit einfach erfüllen. Zudem können die Haltemittel die Einzelzellen, vorzugsweise über einen Einklipp-Mechanismus, besonders stabil innerhalb der Einhausung fixieren. Eine vollständige Abschirmung der Hülle der Einzelzellen bei freigelassenen Polen der Einzelzellen führt generell vorteilhaft zu einem mechanisch stabilen Zellverbund und ermöglicht insbesondere eine genaue Positionierung der Einzelzellen in der Einhausung und erleichtert dadurch die Produktion, beispielsweise bei Herstellungsschritten unter Verwendung von Schweißtechnik.

Durch eine vollständige Abschirmung der Hüllen der Einzelzellen durch die Haltemittel und einen direkten Kontakt zwischen den normalerweise besonders stark erhitzten Polen der Einzelzellen mit dem ersten Kühlmittel kann die Abkühlung der Einzelzellen vorteilhaft besonders schnell erfolgen. Im Falle einer Überhitzung einzelner Einzelzellen durch einen sich selbst verstärkenden wärmproduzierenden Prozesses (sog. thermal runaway) kann besagte vollständige (thermische) Abschirmung zudem vorteilhaft die Wahrscheinlichkeit für ein Überspringen eines Thermal-Runaway-Ereignisses, also einer Überhitzung, auf benachbarte Einzelzellen (sog. thermal propagation) und damit insbesondere die Wahrscheinlichkeit für eine Überhitzungskettenreaktion vorteilhaft verringern.

Weitere vorteilhafte Ausgestaltungen und Weiterbildungen, welche einzeln oder in Kombination miteinander einsetzbar sind, sind Gegenstand der abhängigen Ansprüche.

In einer bevorzugten Ausgestaltung der Erfindung, kann der erste, innere Kühlmittelkreislauf ein, in thermodynamischem Sinn, geschlossenes System sein. Ein geschlossenes System, also ein System ohne Materialaustausch jedoch mit Wärmeaustausch mit der Umgebung, verhindert vorteilhaft Verluste von Kühlmittel im ersten, inneren Kühlmittelkreislauf.

Besonders bevorzugt ist zudem eine Ausgestaltung der Erfindung, bei der die Pumpe an einer der Abdeckungen angeordnet ist. Die Anordnung an einer der Abdeckungen ermöglicht vorteilhaft eine besonders kompakte Bauform.

In einer weiteren bevorzugten Ausgestaltung hat es sich bewährt, wenn die Einhausung, insbesondere die Seitenwände, aus einem gut wärmeleitfähigen Material, vorzugsweise aus Aluminium, gebildet ist. Eine, aus einem gut wärmeleitfähigen Material gebildete Einhausung kann Wärme vorteilhaft schnell vom ersten Kühlmittel des ersten, inneren Kühlmittelkreislaufs aufnehmen und an das zweite Kühlmittel innerhalb der oder den Kühlmittelleitungen des zweiten, äußeren Kühlmittelkreislaufs übertragen.

Darüber hinaus hat sich eine Ausgestaltung der Erfindung bewährt, bei der die Einhausung, insbesondere die Seitenwände, ein in den Innenraum gerichtetes Profil aufweist, wobei die Ausrichtung des Profils bevorzugt korrespondierend zu der oder zu den Kühlmittelleitungen des zweiten, äußeren Kühlmittelkreislaufs ausgebildet ist. Ein in den Innenraum gerichtetes Profil, insbesondere in Form von in den Innenraum hinein zeigenden Rippen und/oder Lamellen oder Ähnlichem, vergrößert vorteilhaft die Oberfläche einer Innenwand der Einhausung, wodurch wiederum die für eine Wechselwirkung mit dem ersten Kühlmittel und somit für die Wärmeübertragung zur Verfügung stehende Oberfläche vorteilhaft vergrößert wird. Dieser Effekt kann zusätzlich dadurch weiter verbessert werden, dass die Ausrichtung des Profils korrespondierend zu der oder zu den Kühlmittelleitungen des zweiten, äußeren Kühlmittelkreislaufs ausgebildet ist, weil sich die Kühlmittelleitungen dann vorteilhaft innerhalb der Profilstruktur anordnen können und das erste Kühlmittel vergleichsweise lange an den zweiten Kühlmittelleitungen entlang strömen kann.

Alternativ oder kumulativ dazu, kann die Einhausung bzw. können insbesondere die Seitenwände, auch doppelwandig ausgebildet sein, wobei sich zwischen einer Außen- und einer Innenwand ein Spalt bildet; und wobei besagter Spalt als Kühlmittelleitung des zweiten, äußeren Kühlkreismittellaufes fungieren kann. Eine derart ausgestaltete Einhausung führt vorteilhaft über ihre gesamte Seitenwandfläche das zweite Kühlmittel durch die als Spalt ausgebildete Kühlmittelleitung und hat somit eine besonders große Wärmeaufnahmekapazität.

Zudem ist von Vorteil, wenn zwischen den Seitenwände und der ersten, vorderseitigen Abdeckung und zwischen den Seitenwände und der zweiten, rückseitigen Abdeckung jeweils eine Dichtung, vorzugsweise jeweils eine, entsprechend eines Querschnitts der Einhausung umlaufende Dichtung, angeordnet ist.

In einer weiteren bevorzugten Ausgestaltung kann die erste, vorderseitige und/oder die zweite, rückseitige Abdeckung wenigstens eine Kühlmittelleitung umfassen, welche Teil des ersten, inneren Kühlmittelkreislaufs ist. Eine in eine der Abdeckungen integrierte Kühlmittelleitung ermöglicht einerseits eine einfache Verbindung der Pumpe mit dem Innenraum der Einhausung und erlaubt es andererseits auch vorteilhaft, Wärmeansammlungen an den Abdeckungen in den ersten, inneren Kühlmittelkreislauf abzuführen.

In einer weiteren Ausgestaltung hat sich bewährt, dass die erste, vorderseitige und/oder die zweite, rückseitige Abdeckung aus einem Kunststoff gebildet ist. Die Verwendung von Kunststoff verringert verteilhaft das Gewicht der Batterieeinheit.

Besonders bevorzugt ist zudem eine Ausgestaltung der Erfindung, bei der das erste Kühlmittel eine gut wärmeleitende, dielektrische Flüssigkeit, insbesondere ein Kohlenwasserstoff oder ein Fluorkohlenwasserstoff, ist; und dass das zweite Kühlmittel eine beliebige, gut wärmeleitende Flüssigkeit, insbesondere ein Wasser-Glykol-Gemisch, ist.

Die Verwendung einer dielektrischen Flüssigkeit als erstes Kühlmitte verhindert vorteilhaft etwaige elektromagnetische Störungen der Einzelzellen, welche in direkten Kontakt mit dem ersten Kühlmittel kommen.

Darüber hinaus hat es sich bewährt, wenn der Innenraum der Einhausung zu 80 %, bevorzugt zu 90 %, mit dem ersten Kühlmittel gefüllt ist und der Rest des Volumens des Innenraums mit Luft gefüllt ist. Dem ersten Kühlmitte steht dadurch vorteilhaft Platz zur Verfügung, wenn es sich bei Wärmeaufnahme ausdehnt.

Bevorzugt ist es schließlich auch, wenn die Haltemittel derart ausgestaltet sind, dass das freie Volumen des Innenraums der Einhausung, in dem sich das erste Kühlmittel bewegt, im Bereich zwischen den Hüllen der Einzelzellen minimiert wird. Die Minimierung des freien Volumens im Innenraum der Einhausung macht vorteilhaft Kühlmitteleinsparungen im ersten, inneren Kühlmittelkreislauf möglich und reduziert so die Betriebskosten.

Das erfindungsgemäße Kühlsystem erlaubt vorteilhaft den Bau von Batterieeinheiten welche thermisch völlig unabhängig von ihrer Umgebung sind und in denen die Wärmeübertragung von den Einzelzellen nach außen und umgekehrt, besonders homogen erfolgt. Batterieeinheiten mit einem derartigen Kühlsystem lassen sich dadurch einfach zu größeren Batteriesystemen zusammenfügen, wobei jede einzelne Batterieeinheit individuell thermisch geregelt werden kann.

Zusätzliche Einzelheiten und weitere Vorteile der Erfindung werden nachfolgend an Hand bevorzugter Ausführungsbeispiele, auf welche die vorliegende Erfindung jedoch nicht beschränkt ist, und in Verbindung mit der beigefügten Zeichnung beschrieben.

Darin zeigen schematisch:
- Fig. 1: eine Ausgestaltung einer Batterieeinheit mit erfindungsgemäßem Kühlsystem in einer Schnitt-Seitenansicht;
- Fig. 2: eine weitere Ausgestaltung der Erfindung in einer Schnitt-Draufsicht;
Bei der nachfolgenden Beschreibung bevorzugter Ausführungsformen der vorliegenden Erfindung bezeichnen gleiche Bezugszeichen gleiche oder vergleichbare Komponenten.

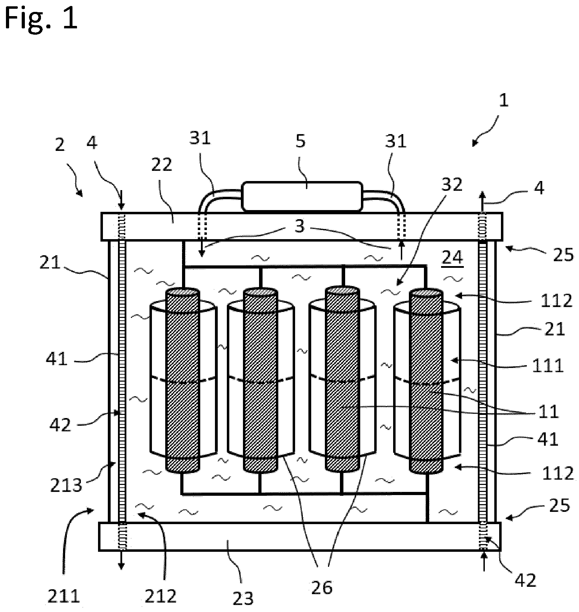

In **Fig. 1** ist eine Ausgestaltung einer Batterieeinheit 1 mit erfindungsgemäßem Kühlsystem in einer Schnitt-Seitenansicht gezeigt.

Ein erfindungsgemäßes Kühlsystem für eine Batterieeinheit 1 aus einer Vielzahl von miteinander elektrisch verbundenen Einzelzellen 11 umfasst wenigstens eine Einhausung 2 mit Seitenwänden 21 und einer ersten, vorderseitigen 22 und zweiten, rückseitigen 23 Abdeckung zum druck- und flüssigkeitsdichten Abschließen eines Innenraumes 24 der Einhausung 2 nach außen. Die Einzelzellen 11 sind, wie in Fig. 1 zu sehen, im Innenraum 24 angeordnet. Zwischen den Seitenwände 21 und der ersten, vorderseitigen Abdeckung 22 und zwischen den Seitenwände 21 und der zweiten, rückseitigen Abdeckung 23 kann bevorzugt jeweils eine Dichtung 25, vorzugsweise jeweils eine, entsprechend eines Querschnitts der Einhausung 2 umlaufende Dichtung 25, angeordnet und insbesondere als eine Flächendichtung ausgestaltet sein. Das erfindungsgemäße Kühlsystem umfasst ferner einen ersten, inneren Kühlmittelkreislauf 3, bei dem wenigstens eine Pumpe 5 ein erstes Kühlmittel 32 im Innenraum 24 der Einhausung 2 zirkuliert. Da der Innenraum 24, insbesondere über das Vorsehen von Dichtungen 25 zwischen den Seitenwänden und der ersten, vorderseitigen 22 bzw. zweiten, rückseitigen 23 Abdeckung, druck- und luftdicht ausgestaltet ist, kann der erste, innere Kühlmittelkreislauf 3 vorteilhaft ein, in thermodynamischem Sinn, geschlossenes System bilden. Das erste Kühlmittel 32 bleibt, mit anderen Worten, stets vorteilhaft innerhalb des Innenraums 24 und der Kühlmittelleitungen 31 zur Pumpe 5 und wird durch diese stetig umgewälzt. Die Einhausung 2 kann dabei vorteilhaft bis zu 1 bar Überdruck tolerieren. Die wenigstens eine Pumpe 5 kann vorzugsweise an einer der Abdeckungen 22 und/oder 23 angeordnet sein und über wenigstens eine Kühlmittelleitung 31, welche Teil der ersten, vorderseitigen 22 und/oder der zweiten, rückseitigen Abdeckung 23 sein kann, mit dem ersten, inneren Kühlmittelkreislauf 3 in Wirkverbindung stehen.

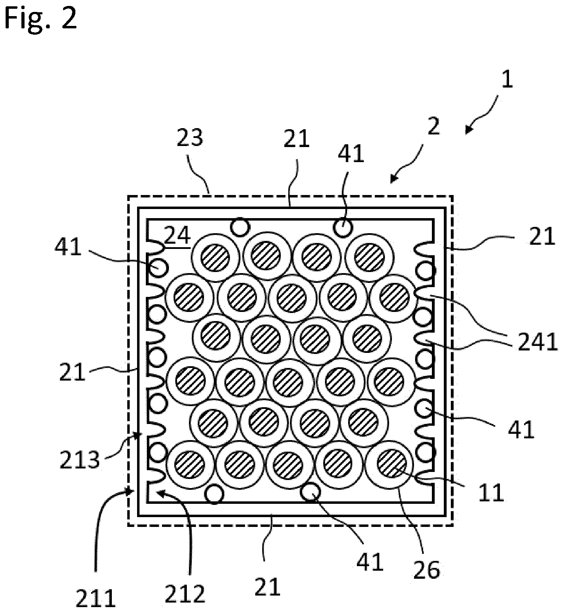

Von diesem ersten Kühlmittelkreislauf 3 unabhängig, ist wenigstens ein zweiter, äußerer Kühlmittelkreislauf 4, welcher durch wenigstens eine Kühlmittelleitung 41 in wenigstens einer der Seitenwände 21 der Einhausung 2 gebildet wird und in welchem ein zweites Kühlmittel 42 zirkuliert, vorgesehen. In Fig. 1 sind exemplarisch zwei Kühlmittelleitungen 41 in zwei einander gegenüberliegenden Seitenwänden 21 eingezeichnet, es können jedoch auch, wie in Fig. 2 zu sehen, alle vier Seitenwände 21 Kühlmittelleitungen 41 des zweiten, äußeren Kühlmittelkreislaufs 4 umfassen und auch die Anzahl der Kühlmittelleitungen 41 pro Seite kann variieren. Bei Betrieb der Batterieeinheit 1 kann dadurch die von den Einzelzellen 11 bei Be- und Entladevorgängen produzierte Wärme zunächst an das im Innenraum 24 zirkulierende erste Kühlmittel 32 abgegeben werden, welches die Wärme zu den Seitenwänden 21 und damit zu den Kühlmittelleitungen 41 des zweiten, äußeren Kühlmittelkreislaufs 4 transportiert. Im Bereich besagter Seitenwände 21 kann dann die Wärme aus dem Innenraum 24 hinaus an das zweite Kühlmittel 42 übertragen und über den zweiten, äußeren Kühlmittelkreislauf 4 abtransportiert werden. Die Einhausung 2, insbesondere die Seitenwände 21, sind daher bevorzugt aus einem gut wärmeleitfähigen Material, vorzugsweise aus Aluminium, gebildet. Die erste, vorderseitige 22 und/oder die zweite, rückseitige Abdeckung 23 können auch aus einem Kunststoff gebildet sein. Der zweite, äußere Kühlmittelkreislauf 4 jeder Batterieeinheit 1 kann an eine weitere, externe Pumpe (nicht gezeigt) angeschlossen sein. Die Kombination der zwei voneinander unabhängigen Kühlmittelkreisläufe 3 und 4 macht die Einhausung 2 der Batterieeinheit 1 vorteilhaft zu einem Wärmetauscher für einen großen Temperaturbereich und die Batterieeinheit 1 selbst zu einer thermisch von ihrer Umgebung unabhängigen Einheit, welche sich insbesondere als Modul für den Aufbau größerer Batteriesysteme eignet, bei denen zudem jedes einzelne Modul, also jede Batterieeinheit 1, thermisch individuell geregelt werden kann.

**Fig. 2** zeigt eine weitere Ausgestaltung der Erfindung in einer Schnitt-Draufsicht.

In Fig. 2 ist eine Ausgestaltung einer Batterieeinheit 1 ohne erste, vorderseitige Abdeckung 22 und ohne Kühlmittel 32 und 42 dargestellt. In dieser Ausgestaltung weist die Einhausung 2, insbesondere die Seitenwände 21, ein in den Innenraum 24 gerichtetes Profil 241 auf, wobei die Ausrichtung des Profils 241 bevorzugt korrespondierend zu der oder zu den Kühlmittelleitungen 41 des zweiten, äußeren Kühlmittelkreislaufs 4 ausgebildet ist. Alternativ oder kumulativ dazu, kann in einer weiteren Ausgestaltung die Einhausung 2, insbesondere die Seitenwände 21, auch doppelwandig ausgebildet sein, wobei sich zwischen einer Außen- 211 und einer Innenwand 212 ein Spalt 213 bildet; und wobei besagter Spalt 213 als Kühlmittelleitung 41 des zweiten, äußeren Kühlmittelkreislaufes 4 fungieren kann. In Fig. 2 kann demnach zweites Kühlmittel 42 sowohl innerhalb der Kühlmittelleitungen 41 als auch im Spalt 213 zirkulieren und die Einhausung 2, insbesondere deren Innenwand 212 somit eine besonders große Oberfläche für die Wärmeübertragung bieten. In einer Variante hierzu können die in Fig. 2 gezeigten Kühlmittelleitungen 41 aber auch weggelassen sein und der Fluss des zweiten Kühlmittels 42 ausschließlich durch den Spalt 213 zischen der Außenwand 211 und Innenwand 212 der doppelwandig ausgebildeten Seitenwände 21 erfolgen. Die profilierte Ausgestaltung - über die Profile 241 - vergrößert auch hier vorteilhaft die Oberfläche und verbessert die Wärmeübertragung.

In allen Ausgestaltungen der Erfindung wird als erstes Kühlmittel 32 bevorzugt eine gut wärmeleitende, dielektrische Flüssigkeit, insbesondere ein Kohlenwasserstoff oder ein Fluorkohlenwasserstoff, verwendet. Das zweite Kühlmittel 42 kann dagegen eine beliebige, gut wärmeleitende Flüssigkeit, insbesondere ein Wasser-Glykol-Gemisch, sein, da das zweite Kühlmittel 42 innerhalb des zweiten, äußeren Kühlmittelkreislaufs 4 vorteilhaft nicht mit dem Innenraum 24 und somit auch nicht mit den Einzelzellen 11 in direkten Kontakt kommt. Dielektrische Flüssigkeiten sind vergleichsweise teuer, so dass die Beschränkung der Verwendung derartiger Flüssigkeiten auf das begrenzte Volumen innerhalb des ersten, inneren Kühlmittelkreislauf 3 vorteilhaft zu einer erheblichen Kostenersparnis führt.

Im Innenraum 24 der Einhausung 2 sind darüber hinaus Haltemittel 26 für die Halterung der Einzelzellen 11 angeordnet, wobei genauso viele Haltemittel 26 wie Einzelzellen 11 im Innenraum 24 vorgesehen sind. Die Einzelzellen 11, welche jeweils eine Hülle 111 und zwei Pole 112 aufweisen, werden dabei durch die Haltemittel 26 erfindungsgemäß derart gehalten, dass die Hülle 111 der Einzelzellen 11 wenigstens abschnittsweise gegenüber einem direkten Kontakt mit dem ersten Kühlmittel 32 abgeschirmt ist und dass die Pole 112 der Einzelzellen 11 frei bleiben und mit dem ersten Kühlmittel 32 in direkten Kontakt kommen. Insbesondere über den Bereich der Pole 112 kann die Einzelzelle 11 dann Wärme an das erste Kühlmittel 32 abgeben, wobei die Haltemittel 26 gleichzeitig derart ausgestaltet sein können, dass das freie Volumen des Innenraums 24 der Einhausung 2, in dem sich das erste Kühlmittel 32 bewegt, im Bereich zwischen den Hüllen 111 der Einzelzellen 11 minimiert wird. Dadurch kann vorteilhaft zusätzlich erstes Kühlmittel 32 eingespart werden.

Der Innenraum 24 der Einhausung 2 sollte zudem vorzugsweise nur zu 80 %, bevorzugt zu 90 %, mit dem ersten Kühlmittel 32 gefüllt und der Rest des Volumens des Innenraums 24 mit Luft gefüllt sein, so dass sich das erste Kühlmittel 32 bei Erwärmung ausdehnen kann. Die Dichtungen 25 zur Abdichtung der Seitenwände 21 gegenüber den Abdeckungen 22 und 23 sind dabei vorzugsweise derart ausgestaltet, dass sie den entstehenden Überdruck im Innenraum 24 von ungefähr 0,3 bar problemlos tolerieren können.

Die vorliegende Erfindung betrifft ein Kühlsystem für eine Batterieeinheit 1 aus einer Vielzahl von miteinander elektrisch verbundenen Einzelzellen 11, wenigstens umfassend: eine Einhausung 2 mit Seitenwänden 21 und einer ersten, vorderseitigen 22 und zweiten, rückseitigen 23 Abdeckung zum druck- und flüssigkeitsdichten Abschließen eines Innenraumes 24 der Einhausung 2 nach außen; wobei die Einzelzellen 11 im Innenraum 24 angeordnet sind. Es zeichnet sich durch einen ersten, inneren Kühlmittelkreislauf 3 aus, bei dem wenigstens eine Pumpe 5 ein erstes Kühlmittel 32 im Innenraum 24 zirkuliert; und durch wenigstens einen zweiten, äußeren Kühlmittelkreislauf 4, welcher durch wenigstens eine Kühlmittelleitung 41 in wenigstens einer der Seitenwände 21 gebildet wird und in welchem ein zweites Kühlmittel 42 zirkuliert. Das erfindungsgemäße Kühlsystem erlaubt vorteilhaft den Bau von thermisch unabhängig Batterieeinheiten 1 mit einer homogenen Wärmeübertragung im Innenraum 24. Solche Batterieeinheiten 1 lassen sich einfach zu größeren Batteriesystemen zusammenfügen, wobei jede Batterieeinheit 1 individuell geregelt werden kann.

### Bezugszeichenliste

- 1: Batterieeinheit
- 11: Einzelzelle
- 111: Hülle
- 112: Pol

- 2: Einhausung
- 21: Seitenwand
- 211: Außenwand
- 212: Innenwand
- 213: Spalt
- 22: erste, vorderseitige Abdeckung
- 23: zweite, rückseitige Abdeckung
- 24: Innenraum
- 241: Profil
- 25: Dichtung
- 26: Haltemittel für Einzelzellen (11)

- 3: erster, innerer Kühlmittelkreislauf
- 31: Kühlmittelleitung
- 32: erstes Kühlmittel

- 4: zweiter, äußerer Kühlmittelkreislauf
- 41: Kühlmittelleitung
- 42: zweites Kühlmittel

- 5: Pumpe

## Patentansprüche

1. Kühlsystem für eine Batterieeinheit (1) aus einer Vielzahl von miteinander elektrisch verbundenen Einzelzellen (11), wenigstens umfassend:
- eine Einhausung (2) mit Seitenwänden (21) und einer ersten, vorderseitigen (22) und zweiten, rückseitigen (23) Abdeckung zum druck- und flüssigkeitsdichten Abschließen eines Innenraumes (24) der Einhausung (2) nach außen;
- wobei die Einzelzellen (11) im Innenraum (24) angeordnet sind;
**dadurch gekennzeichnet, dass** das Kühlsystem
- einen ersten, inneren Kühlmittelkreislauf (3) umfasst, bei dem wenigstens eine Pumpe (5) ein erstes Kühlmittel (32) im Innenraum (24) der Einhausung (2) zirkuliert;
- und wenigstens einen zweiten, äußeren Kühlmittelkreislauf (4) umfasst, welcher durch wenigstens eine Kühlmittelleitung (41) in wenigstens einer der Seitenwände (21) der Einhausung (2) gebildet wird und in welchem ein zweites Kühlmittel (42) zirkuliert
- und dass im Innenraum (24) der Einhausung (2) Haltemittel (26) für die Halterung der Einzelzellen (11) angeordnet sind,
- wobei genauso viele Haltemittel (26) wie Einzelzellen (11) im Innenraum (24) vorgesehen sind;
- wobei die Einzelzellen (11) jeweils eine Hülle (111) und zwei Pole (112) aufweisen,
- und wobei die Haltemittel (26) die Einzelzellen (11) derart halten, dass die Hülle (111) der Einzelzellen (11) gegenüber einem direkten Kontakt mit dem ersten Kühlmittel (32) abgeschirmt ist und dass die Pole (112) der Einzelzellen (11) frei bleiben und mit dem ersten Kühlmittel (32) in direkten Kontakt kommen.

2. Kühlsystem nach Anspruch 1, **dadurch gekennzeichnet, dass** der erste, innere Kühlmittelkreislauf (3) ein, in thermodynamischem Sinn, geschlossenes System ist.

3. Kühlsystem nach Anspruch 1 oder 2, **dadurch gekennzeichnet, dass** die Pumpe (5) an einer der Abdeckungen (22; 23) angeordnet ist.

4. Kühlsystem nach einem der Ansprüche 1 bis 3, **dadurch gekennzeichnet, dass** die Einhausung (2), insbesondere die Seitenwände (21), aus einem gut wärmeleitfähigen Material, vorzugsweise aus Aluminium, gebildet ist.

5. Kühlsystem nach einem oder mehreren der vorherigen Ansprüche, **dadurch gekennzeichnet, dass** die Einhausung (2), insbesondere die Seitenwände (21), ein in den Innenraum (24) gerichtetes Profil (241) aufweist, wobei die Ausrichtung des Profils (241) bevorzugt korrespondierend zu der oder zu den Kühlmittelleitungen (41) des zweiten, äußeren Kühlmittelkreislaufs (4) ausgebildet ist.

6. Kühlsystem nach einem oder mehreren der vorherigen Ansprüche, **dadurch gekennzeichnet, dass** die Einhausung (2), insbesondere die Seitenwände (21), doppelwandig ausgebildet sind,
- wobei sich zwischen einer Außen- (211) und einer Innenwand (212) ein Spalt (213) bildet;
- und wobei besagter Spalt (213) als Kühlmittelleitung (41) des zweiten, äußeren Kühlmittelkreislaufes (4) fungiert.

7. Kühlsystem nach einem oder mehreren der vorherigen Ansprüche, **dadurch gekennzeichnet, dass** zwischen den Seitenwänden (21) und der ersten, vorderseitigen Abdeckung (22) und zwischen den Seitenwänden (21) und der zweiten, rückseitigen Abdeckung (23) jeweils eine Dichtung (25), vorzugsweise jeweils eine, entsprechend eines Querschnitts der Einhausung (2) umlaufende Dichtung (25), angeordnet ist.

8. Kühlsystem nach einem oder mehreren der vorherigen Ansprüche, **dadurch gekennzeichnet, dass** die erste, vorderseitige (22) und/oder die zweite, rückseitige Abdeckung (23) wenigstens eine Kühlmittelleitung (31) umfasst, welche Teil des ersten, inneren Kühlmittelkreislaufs (3) ist.

9. Kühlsystem nach einem oder mehreren der vorherigen Ansprüche, **dadurch gekennzeichnet, dass** die erste, vorderseitige (22) und/oder die zweite, rückseitige Abdeckung (23) aus einem Kunststoff gebildet ist.

10. Kühlsystem nach einem oder mehreren der vorherigen Ansprüche, **dadurch gekennzeichnet, dass** das erste Kühlmittel (32) eine gut wärmeleitende, dielektrische Flüssigkeit, insbesondere ein Kohlenwasserstoff oder ein Fluorkohlenwasserstoff, ist; und dass das zweite Kühlmittel (42) eine beliebige, gut wärmeleitende Flüssigkeit, insbesondere ein Wasser-Glykol-Gemisch, ist.

11. Kühlsystem nach einem oder mehreren der vorherigen Ansprüche, **dadurch gekennzeichnet, dass** der Innenraum (24) der Einhausung (2) zu 80 %, bevorzugt zu 90 %, mit dem ersten Kühlmittel (32) gefüllt ist und der Rest des Volumens des Innenraums (24) mit Luft gefüllt ist.

12. Kühlsystem nach einem oder mehreren der vorherigen Ansprüche, **dadurch gekennzeichnet, dass** die Haltemittel (26) derart ausgestaltet sind, dass das freie Volumen des Innenraums (24) der Einhausung (2), in dem sich das erste Kühlmittel (32) bewegt, im Bereich zwischen den Hüllen (111) der Einzelzellen (11) minimiert wird.

13. Batterieeinheit (1) umfassend ein Kühlsystem nach einem der Ansprüche 1 bis 12.
